(19)

Europäisches
Patentamt
European
Patent Office
Office européen
des brevets

(11) **EP 1 770 886 A1**

(12) **EUROPEAN PATENT APPLICATION**

(43) Date of publication:
**04.04.2007 Bulletin 2007/14**

(51) Int Cl.:
*H04J 3/16* (2006.01)     *H04J 3/07* (2006.01)

(21) Application number: **06000472.8**

(22) Date of filing: **11.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.09.2005 JP 2005284295**

(71) Applicant: **Fujitsu Ltd.**
**Kawasaki-shi, Kanagawa 211-8588 (JP)**

(72) Inventors:
• **Fukumitsu, Katsumi**
**Kawasaki-shi**
**Kanagawa 211-8588 (JP)**

• **Ibukuro, Sadao c/o Fujitsu Microel. Solutions Ltd.**
**Yokohama-shi**
**Kanagawa 222-0033 (JP)**

(74) Representative: **HOFFMANN EITLE**
**Patent- und Rechtsanwälte**
**Arabellastrasse 4**
**81925 München (DE)**

Remarks:
Amended claims in accordance with Rule 86 (2) EPC.

(54) **Signal multiplexing apparatus and stuff controlling method therein**

(57) A signal multiplexing apparatus has an OPU/ODU processing unit 4 putting a local protocol signal into an OPU/ODU signal, an ODTU processing unit 5 generating an ODTU signal from the OPU/ODU signal, a read-out position detecting unit 3 detecting a read-out position at the time that the OPU-ODU processing unit 4 reads out the local protocol signal, and a stuff allocation controlling unit 6 allocating a stuff control amount to be used when the OPU/ODU processing unit 4 puts the local protocol signal into the OPU/ODU signal and a stuff control amount to be used when the ODTU processing unit 5 generates the ODTU signal, on the basis of the read-out position detected by the read-out position detecting unit 3. The signal multiplexing apparatus can effectively absorb an amount of fluctuation in bit rate when asynchronously multiplexing the local protocol signal such as a 10GE signal in an optical transport network.

FIG. 1

EP 1 770 886 A1

**Description**

BACKGROUND OF THE INVENTION

1) Field of the Invention

The present invention relates to a signal multiplexing apparatus and a stuff controlling method therein suitable for use at the time that a local protocol signal such as an Ethernet (registered trademark) signal is asynchronously multiplexed in an optical transport network (OTN).

1) Background of the Invention

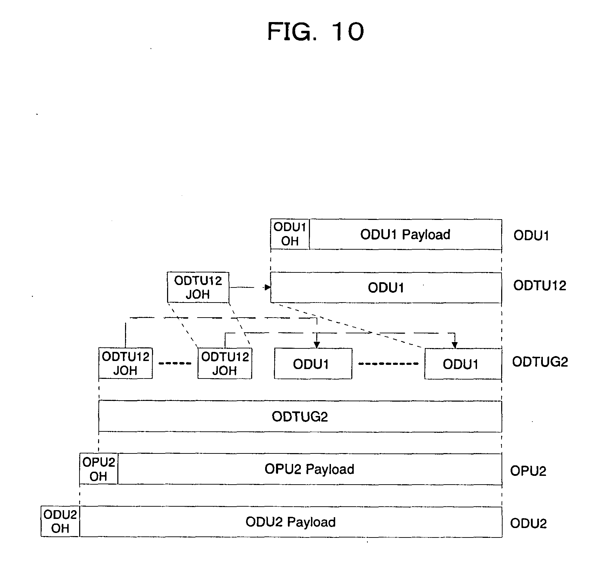

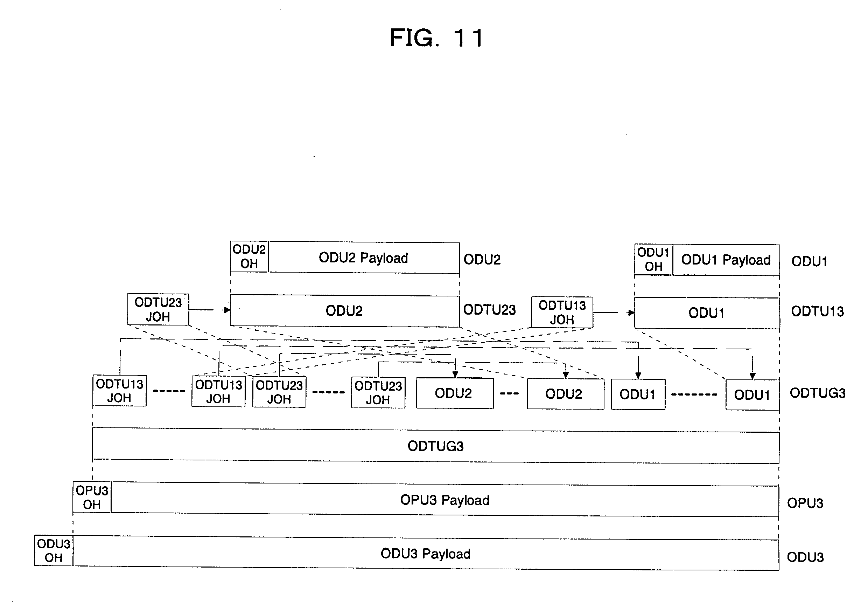

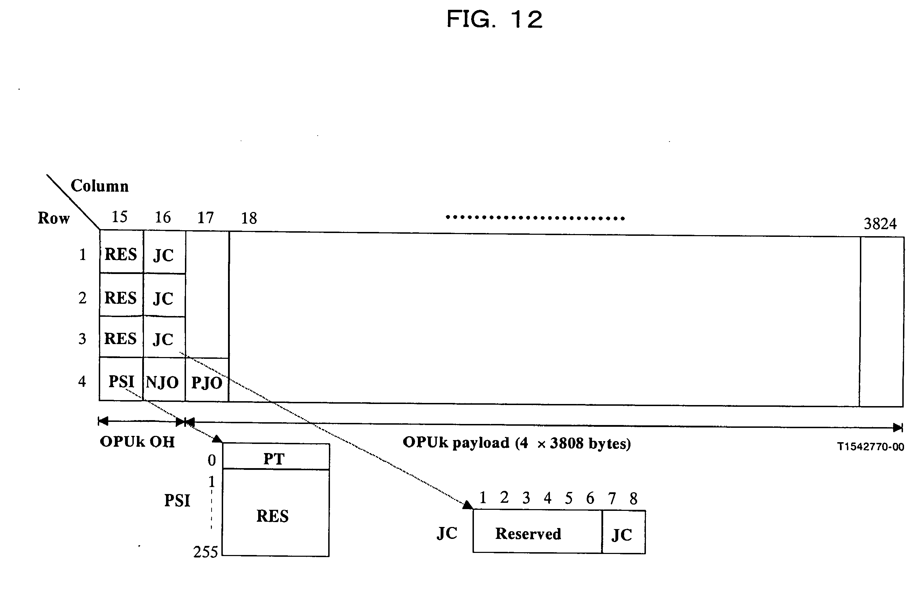

Recent arrival of a broadband era rises a demand for an Ethernet (registered trademark) signal having a speed of 10 Gb/s as one of 10 Gb/s signal group as well as an STM64/OC192 signal. Hereinafter, an Ethernet signal having a speed of 10Gb/s is mentioned as a 10GE signal. Asynchronous mapping of the STM64/OC192 signal on four channels into OTU (Optical channel Transport Unit) 3 frames in the OTN is defined in ITU-T Recommendation [ITU-T G. 709 OTU3]. Recently, there is also a demand for a system for mapping the 10GE signal into a signal corresponding to OTU3.

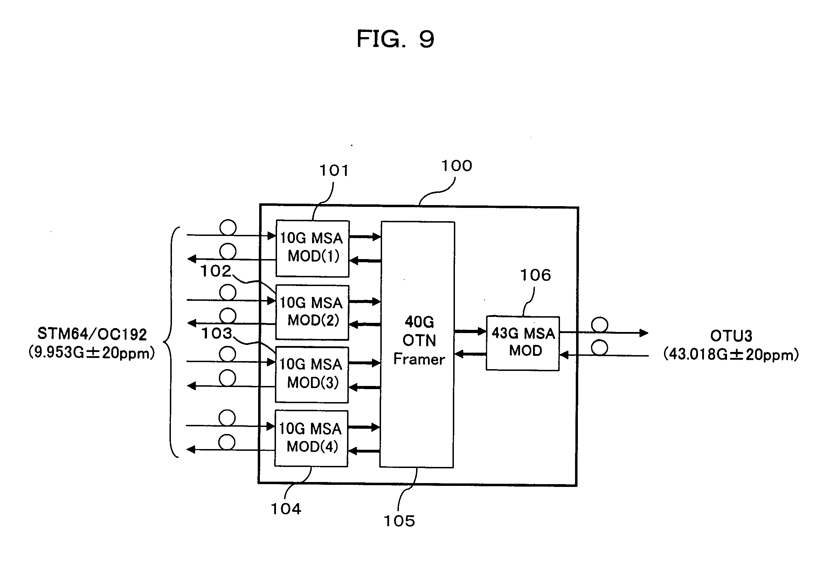

FIG. 9 is a diagram showing a general structure of a signal multiplexing apparatus meeting ITU-T G.709 OTU3.The multiplexing apparatus asynchronously maps an STM64/OC192 signal, which is one of the 10Gb/s signal group, into an OUT 3 frame on four channels. The multiplexing apparatus comprises MSA modules (Multi Source Agreement module: MSA MOD) 101 through 104 which are 10G interfaces for four channels, an OTN framer 105 and an MSA module 106 which is a 43G interface.
Each of the MSA modules 101 through 104 converts an STM64/OC192 signal at 9.95328 Gb/s±20ppm from an optical signal to an electric signal, and hands it to the OTN framer 105. With respect to the STM64/OC192 signal, the OTN framer 105 forms successively in the order of OPU2 (Optical channel Payload Unit-2) frame signal, ODU2 (Optical channel Data Unit-2) frame signal, ODUT 23 frame signal, ODTUG3 frame signal, ODU3 frame signal and OTU3 frame signal, as shown in FIGS. 10 and 11, for example.
The transmission rate of the STM64/OC192 signal is 9.95328 Gb/s±20ppm, while the transmission rate of the OTU3 signal is 43.01841 Gb/s ± 20ppm. Namely, each of the STM64/OC192 signal and the OTU3 signal is allowed to have a fluctuation in speed of± 20ppm, thus a fluctuation of ±40ppm is allowed as the sum.
The fluctuation in speed of ± 40ppm allowed in the STM64/OC192 and the OTU3 signal can be absorbed by performing a stuff control using a C bytes (Justification Control Byte, refer to FIG. 12) in OPU2 in the OTU3 frame structure. Practically, an NJO byte for the negative stuff control located at a byte position in the fourth column and the sixteenth row is inserted, or a PJO byte for the positive stuff control located at a byte position in the fourth column and the seventeenth row is inserted.
The stuff control using the JC bytes in OPU2 as this can absorb a fluctuation of ±65ppm of the STM64/OC192 signal, as follows.
Namely, $\alpha$ (justification ratio) is defined in ITU-T G.709 APPENDIX I as follows.
-1 $\leqq \alpha \leqq$ 1 for CBR client into ODUk mapping (STM64 $\rightarrow$ ODU2)

※ positive $\alpha$ will correspond to negative justification and negative $\alpha$ will correspond to positive justification.
Therefore, in an operation of asynchronous multiplexing from STM64 to ODU2, the range of justification ratio $\alpha$ is -1 $\leqq \alpha \leqq$ 1.
Assuming that $\beta$-1 = Y (frequency offset), $\alpha$ and $\beta$ are represented as below by the following equations (1) and (2) from the equation (8) in ITU-T G.709 APPENDIX I:

$$\alpha = 15168\beta + 64 - 15232 = 15168(\beta - 1) \quad \ldots \quad (1)$$

$$\beta = (\alpha + 15168)/15168 \quad \ldots \quad (2)$$

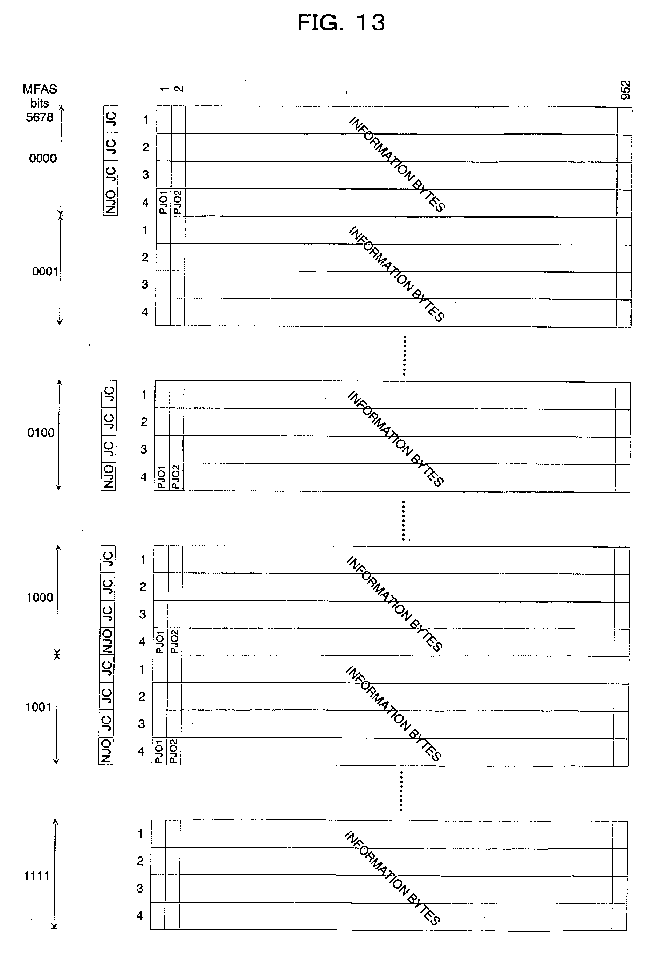

When $\alpha$ = 1 is substituted in the equation (2), $\beta$-1 = 65.93ppm. When $\alpha$ = -1 is substituted in the same, $\beta$-1 = -65.93ppm. Accordingly, the range of Y is -65.93ppm $\leqq$ Y $\leqq$ 65.93ppm within a range of -1 $\leqq \alpha \leqq$ 1.Namely, a frequency fluctuation is allowed under the condition that Y is in above range.
The ODTU23 signal is inserted into 16 time slots identified by MFAS (Multi Frame Alignment Signal) of four bits in FIG. 13 to form the ODTUG3 signal. The stuff control is possible by using the JC bytes in the ODTU23 signal in the ODTUG3 signal. In FIG. 13, the NJO byte (one byte) for the negative stuff control or the PJO bytes (two bytes) for the positive stuff control are inserted into the header portion in the fourth row of the ODTU23 signal in each of the time slots of "0000," "0100," "1000" and "1001."

The stuff control using the JC bytes in the ODTU23 as above can absorb a fluctuation of the STM64/OC192 signal within a range from -95ppm to +101ppm as follows.

Namely, $\alpha$ (justification ratio) is defined as below according to ITU-T G.709 APPENDIX I:

-2 $\leqq$ $\alpha$ $\leqq$ 1 for ODUj into ODUk mapping (k>j) (ODU2 $\rightarrow$ ODU3)

※ positive $\alpha$ will correspond to negative justification and negative $\alpha$ will correspond to positive justification.

Accordingly, in the operation of asynchronous multiplication from ODU2 to ODU3, the range of $\alpha$ is -2 $\leqq$ $\alpha$ $\leqq$ 1.

According to the equation (23) in ITU-T G. 709 APPENDIX I, $\alpha$ and Y (frequency offset) are represented by equations (3) and (4) below, where N represents the number of fixed stuff bytes.

$$\alpha = 4N - 0.5400844 + 15231.459916Y \ldots (3)$$

$$Y = (\alpha - 4N + 0.5400844)/15231.459916 \ldots (4)$$

When N=0 and $\alpha$ = 1 are substituted in the equation (4), Y = 101.11ppm. When N=0 and $\alpha$ = -2 are substituted in the same, Y=-95.85ppm. Accordingly, the range of Y is -95.85ppm $\leqq$ Y $\leqq$ 101.11ppm within a range of -2 $\leqq$ $\alpha$ $\leqq$1. Namely, a frequency fluctuation is allowed under the condition that Y is in above range.

As above, ITU-T G.709 recommends that the fluctuation in speed of the STM64/OC192 signal and the OTU3 should be absorbed, by using the JC bytes in the OPU2 or the ODTU23 in the case of the STM64/OC192 signal, thereby providing appropriate mapping.

Meanwhile, a technique relating to the present invention is described in a patent document 1 below:

Patent Document 1: Unexamined Japanese Patent Application Publication No. 2004-221952

When the 10GE signal on four channels is asynchronously mapped into a signal (whose bit rate is 44.57097 Gb/s or 44.38291 Gb/s) corresponding to OTU3 using the above-mentioned multiplexing apparatus 100 shown in FIG. 9, it is difficult to completely absorb the amount of the fluctuation only by the JC bytes in the OPU2 or ODTU23 because the amount of the fluctuation of 10GE is ±100ppm and the amount of the fluctuation of OUT3 is ± 20ppm, totaling ±120ppm. This is a sticking point.

The techniques described in ITU-T G.709 and the above patent document 1 do not give attention at all to the difficulty of absorbing the amount of fluctuation in bit rate at the time that the 10GE signal is mapped into a signal corresponding to OTU3.

SUMMARY OF THE INVENTION

In the light of the above problem, an obj ect of the present invention is to provide a signal multiplexing apparatus and a stuff controlling method therein, which can absorb effectively an amount of fluctuation in bit rate when a local protocol signal such as a 10GE signal is asynchronously multiplexed in an optical transport network.

Therefore, one aspect of the present invention provides a signal multiplexing apparatus for multiplexing an OPU/ODU (Optical channel Payload Unit/Optical channel Data unit) signal in an optical transport network (OTN) comprising an OPU/ODU processing unit for putting a local protocol signal in an OPU/ODU signal coping with a speed of the local protocol signal, an ODTU processing unit for generating an ODTU signal from the OPU/ODU signal accommodating the local protocol signal, a read-out position detecting unit for detecting a read-out position at the time that the OPU/ODU processing unit reads out the local protocol signal, and a stuff allocation controlling unit for allocating a stuff control amount to be used when the OPU/ODU processing unit puts the local protocol signal in the OPU/ODU signal and a stuff control amount to be used when the ODTU processing unit generates the ODTU signal, on the basis of the read-out position detected by the read-out position detecting unit.

In this case, the signal multiplexing apparatus may further comprise a buffer in which the local protocol signal to be fed to the OPU/ODU processing unit is written at a clock in synchronism with a speed of the local protocol signal and held, wherein the OPU/ODU processing unit reads out the local protocol signal written in the buffer at a clock in synchronism with a speed of the OPU/ODU signal, and the read-out position detecting unit detects a read-out position at the time that the OPU/ODU processing unit reads out the local protocol signal from the buffer as the read-out position.

The read-out position detecting unit may output a value corresponding to a difference between a clock frequency in synchronism with the speed of the local protocol signal and a clock frequency in synchronism with the speed of the OPU/ODU signal as the read-out position.

The stuff allocation controlling unit may comprise a storing unit for storing the stuff control amount to be used when the OPU/ODU processing unit puts the local protocol signal in the OPU/ODU signal and the stuff control amount to be used when the ODTU processing unit generates the ODTU signal, on the basis of the read-out position detected by the read-out position detecting unit, and a stuff control directing unit referring t'o contents stored in the storing unit on the basis of the read-out position detected by the read-out position detecting unit to direct the OPU/ODU processing unit and the ODTU processing unit to perform a stuff control.

The storing unit may store a polarity, the number of bytes used in the stuff control performed by the OPU/ODU processing unit and the ODTU processing unit and a frame cycle in which the stuff control is performed, according to the read-out position detected by the read-out position detecting unit.

The storing unit may store the number of sections so as to equally allocate the number of bytes used in the stuff control within the frame cycle when the read-out position is in the neighborhood of a read-out position at which the stuff control by the OPU/ODU processing unit and the ODTU processing unit is set not to be performed, the stuff control directing unit may direct the OPU/ODU processing unit and the ODTU processing unit to perform the stuff control so that the stuff control using the number of bytes in the above number is equally allocated over the sections in the set number within the frame cycle on the basis of the contents of the storing unit.

A set of the OPU/ODU processing unit, the ODTU processing unit and the stuff allocation controlling unit may be provided in number corresponding to the number of channels of the OPU/ODU signal to be multiplexed, and the storing unit in the stuff allocation controlling unit in each of the sets may store stuff control amount information for the stuff control by the OPU/ODU processing unit and the ODTU processing unit in a relevant channel.

In which case, the signal multiplexing apparatus may further comprise an external memory for storing collectively settings of the stuff control by the respective sets of the OPU/ODU processing unit and the ODTU processing unit, wherein the stuff allocation controlling units in the respective channels may capture the settings of the stuff control by the sets of the OPU/ODU processing unit and the ODTU processing unit at the time of a start.

Further, the signal multiplexing apparatus may further comprise an external memory for storing separately a setting of the stuff control by each of the sets of the OPU/ODU processing unit and the ODTU processing unit, wherein the stuff allocation controlling unit in each of the channels captures the setting of the stuff control by the set of the OPU/ODU processing unit and the ODTU processing unit at the time of a start.

Preferably, the local protocol signal is a 10 Gb/s Ethernet (registered trademark) signal.

The OPU/ODU processing unit may put the local protocol signal in an OPU2/ODU2 signal which is the OPU/ODU signal coping with a speed of the local protocol signal, the ODTU processing unit may generate an ODTU23 signal from the OPU/ODU signal accommodating the local protocol signal, and the stuff allocation controlling unit may allocate a stuff control amount to be used when the OPU/ODU processing unit puts the local protocol signal in the OPU2/ODU2 signal and a stuff control amount to be used when the ODTU processing unit generates the ODTU23 signal, on the basis of the read-out position detected by the read-out position detecting unit.

The signal multiplexing apparatus may further comprise a multiplexing unit for multiplexing the ODTU signal generated by the ODTU processing unit.

The present invention further provides a stuff controlling method in a signal multiplexing apparatus multiplexing an OPU/ODU (Optical channel Payload Unit/Optical channel Data Unit) signal in an optical transport network (OTN) comprising the steps of capturing once each of local protocol signals in a buffer, successively reading out the local protocol signal, putting the local protocol signal in an OPU/ODU signal coping with a speed of the local protocol signal, generating an ODTU signal from the OPU/ODU signal accommodating the local protocol signal, detecting a read-out position of the local protocol signal at the time that the local protocol signal captured in the buffer is read out, and allocating a stuff control amount to be used when the local protocol signal is accommodated in the OPU/ODU signal and a stuff control amount to be used when the ODTU signal is generated, on the basis of the read-out position.

According to this invention, the stuff allocation controlling unit can allocate a stuff control amount to be used when the OPU/ODU processing unit puts a local protocol signal in an OPU/ODU signal and a stuff control amount to be used when the ODTU processing unit generates an ODTU signal, on the basis of a read-out position detected by the read-out position detecting unit. This makes it possible to absorb efficiently an amount of fluctuation in bit rate when a local protocol signal such as a 10GE signal is asynchronously multiplexed in an optical transport network, by using, efficiently and rationally, bytes for the stuff control given to OPU/ODU and ODTU.

BRIEF DESCRIPTION OF THE DRAWINGS

FIG. 1 is a block diagram showing a signal multiplexing apparatus according to an embodiment of this invention;

FIG. 2 is a diagram for illustrating a read-out position detected by an ES read-out position detecting unit according to the embodiment of this invention;

FIG. 3 is a diagram showing information relating to a stuff control stored in a storing unit according to the embodiment of this invention;

FIGS. 4 and 5 are diagrams for illustrating an example of an operation performed when the signal multiplexing apparatus is started according to the embodiment of this invention;

FIGS. 6 through 8 are diagrams for illustrating the operation of the signal multiplexing apparatus according to the embodiment of this invention;

FIG. 9 is a diagram showing a general structure of a signal multiplexing apparatus adapted to ITU-T G.709 OTU3;

FIGS. 10 and 11 are diagrams showing an ODU/OPU frame;

FIG. 12 is a diagram showing a frame format of the OPU frame; and

FIG. 13 is a diagram showing a frame format of an ODTUG3/ODTU23 frame.

DESCRIPTION OF THE PREFERRED EMBODIMENTS

Hereinafter, description will be made of an embodiment of the present invention with reference to the drawings.

Besides the above object of this invention, another technical problem, a means for solving the problem and its working effects will be apparent from the disclosure of the following embodiment.

[A1] Description of an Embodiment of Invention

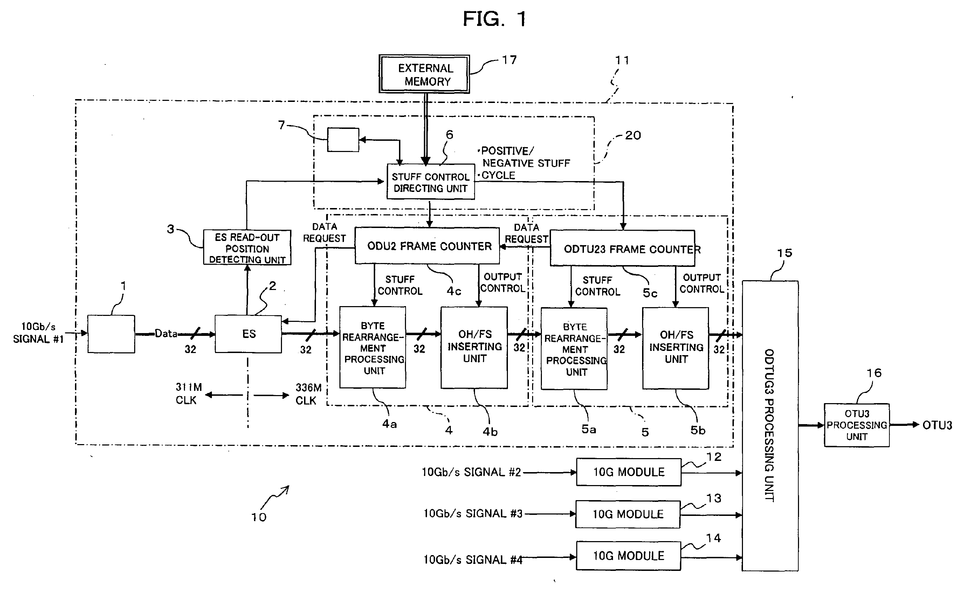

FIG. 1 is a block diagram showing a signal multiplexing apparatus 10 according to an embodiment of this invention. The signal multiplexing apparatus 10 shown in FIG. 1 is adapted to ITU-T G.709 OTU3 like that shown in FIG. 9, and can asynchronously map an STM64/OC192 signal which is one of 10Gb/s signal group into the OTU3 frame on four channels. The signal multiplexing apparatus 10 can also map a local protocol signal such as a 10GE signal into a signal corresponding to the OTU3 frame while absorbing the amount of fluctuation in bit rate.

The signal multiplexing apparatus 10 shown in FIG. 1 comprises 10G modules 11 through 14 provided correspondingly to the 10Gb/s signal group on four channels, an ODTUG3 processing unit 15, an OTU3 processing unit 16, and an external memory (storage unit) 17 for storing settings of the stuff control in the 10G modules 11 through 14.

The 10G modules 11 through 14 perform a frame forming process on the 10Gb/s signal on channels #1 to #4 according to OTU, and output frame signals corresponding to ODU2 into which overheads of ODTU23 are inserted. The ODTUG3 processing unit 15 performs a process of byte rearrangement and so forth on the frame signals from the 10G modules 11 through 14 to generate an ODTUG3 frame signal.

The ODTUG3 signal has a frame format of 40 Gb/s in which the ODTU23 signal is allocated to 16 time slots identified by MFAS (Multi Frame Alignment Signal) of four bits shown in FIG. 13. The 10 Gb/s signal group such as STM64 or 10GE can be allocated to four time slots among 16 time slots in FIG. 13.

The OTU3 processing unit 16 inserts an overhead, an error correction code, etc. to the frame signal from the ODTUG3 processing unit 15 to generate a frame signal in OTU3 of 43 Gb/s, and outputs it as an optical signal. In short, the signal multiplexing apparatus 10 can multiplex the 10 Gb/s signal group on four channels, and output it as an optical signal in the OTU3 frame form of 43 Gb/s.

Each of the 10G modules 11 through 14 comprises an STM processing unit 1, an elastic store (ES) 2, an ES read-out position detecting unit 3, an OPU2/ODU2 processing unit 4, an ODTU processing unit 5 and a stuff allocation controlling unit 20. In other words, the OPU2/ODU2 processing unit 4, the ODTU processing unit 5, the stuff allocation controlling unit 20, the STM processing unit 1, the ES 2 and the ES read-out position detecting unit 3 are provided in number corresponding to the number of channels of the OPU/ODU signal to be multiplexed.

The STM processing unit 1 converts an optical signal which is one of 10 Gb/s signal group such as an STM64 signal whose bit rate is 9.95328 Gb/s ±20ppm or a 10GE signal whose bit rate is 10.3125 Gb/s±100ppm into an electric signal, and outputs it as a data signal (electric signal) composed of, for example, a 32-bit (4-byte) parallel signal.

The STM processing unit 1 according to the first embodiment outputs the 10 Gb/s signal group as a 32-bit parallel signal, but this invention allows a parallel signal form other than this.

In this case, since the bit rate of the STM64 signal is 9.95328 Gb/s±20ppm, the STM signal is written almost in synchronism with a frequency of approximately 311 MHz±20ppm in the ES 2, while the 10GE signal is written in synchronism with a frequency of approximately 322 MHz±100ppm in the ES 2.

The OPU2/ODU2 processing unit 4 reads out a data signal stored in the ES 2, and outputs it as a 32-bit parallel ODU2 signal at approximately 336 MHz. The OPU2/ODU2 processing unit 4 comprises a byte rearrangement processing unit 4a, an OH/FS inserting unit 4b and an ODU2 frame counter 4c.

The byte rearrangement processing unit 4a rearranges the byte arrangement of the data signal read out from the ES 2 almost in synchronism with 336 MHz corresponding to the frame cycle of the ODU2 signal, and outputs it. The OH/FS inserting unit 4b inserts an overhead (OH), an FS, etc. to the data signal from the byte rearrangement processing unit 4a, and outputs the signal as an ODU2 signal.

The ODU2 frame counter 4c controls an output of the OPU2/ODU2 signal from the OH/FS inserting unit 4b in response to a data request from the ODTU processing unit 5, while performing the stuff control through a control on the byte rearrangement by the byte rearrangement processing unit 4a.

The ODTU processing unit 5 reads out the OPU2/ODU2 signal from the OPU2/ODU2 processing unit 4, and outputs an ODTU23 signal. The ODTU processing unit 5 comprises a byte rearrangement processing unit 5a rearranging the bytes of the ODU2 signal, an OH/FS inserting unit 5b inserting an overhead, an FS, etc. to the data signal from the byte rearrangement processing unit 5a and outputting the signal as an ODTU23 signal, and an ODTU frame counter 5c. Incidentally, it is possible to interpose an ES between the ODTU processing unit 5 and the OPU2/ODU2 processing unit 4 for the clock discontinue control.

The ODTU23 frame counter 5c requests data to the ODU2 frame counter 4c according to the above-mentioned frame format shown in FIG. 13. Namely, the above ODU2 frame counter 4c operates in response to a data request from the ODTU23 frame counter 5c to perform the output control of the ODU2 signal on the OH/FS inserting unit 4b.And the ODTU23 frame counter 5c can perform the stuff control through a control on the byte rearrangement by the byte rearrangement processing unit 5a.

The ES read-out position detecting unit 3 counts a value corresponding to a frequency difference (y: frequency offset) between a clock signal at a frequency used to write the above-mentioned 10 Gb/s signal group into the ES 2 and a clock signal at a frequency of 336 MHz at which the data signal is read out from the ES 2, and outputs it as a count value.

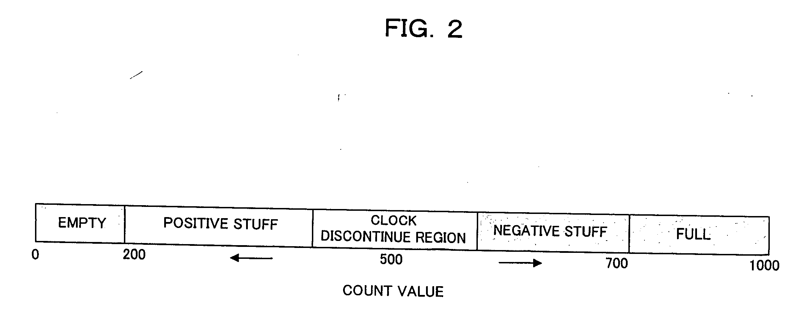

As shown in FIG. 2, for example, the count value obtained by the ES read-out position detecting unit 3 corresponds to a relative reading position of a frame signal at the time that the 10 Gb/s signal group written in the ES 2 is read out, within a range from "0" to "1000." When the both frequencies are stabilized, the count value is almost a constant value within a range from "450" to "550".

A stuff control directing unit 6 directs the OPU2/ODU2 processing unit 4 and the ODTU processing unit 5 to perform the stuff control shown in FIG. 2, for example, on the basis of the count value from the ES read-out position detecting unit 3. The stuff control by the OPU2/ODU2 processing unit 4 and the ODTU processing unit 5 signifies a control to narrow the payload region (positive stuff control) or a control to widen the payload region (negative stuff control) by using the JC bytes in the OPU2 signal and the ODTU23 signal.

In this case, when the count value from the ES read-out position detecting unit 3 is less than "450", the stuff control directing unit 6 directs either one or both of the OPU2/ODU2 processing unit 4 and the ODTU processing unit 5 to perform the positive stuff control. When the count value from the ES read-out position detecting unit 3 is larger than "550", the stuff control directing unit 6 directs either one or both of the OPU2/ODU2 processing unit 4 and the ODTU processing unit 5 to perform the negative stuff control.

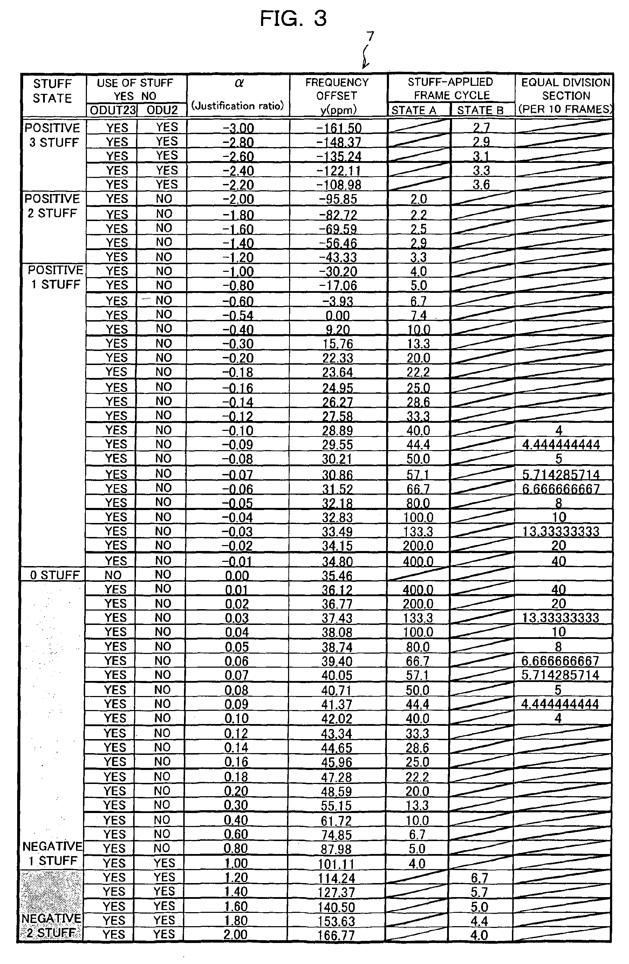

A storing unit 7 configures a working area for the stuff control directing unit 6 to store the amount of the stuff control by each of the OPUS2/ODU2 processing unit 4 and the ODTU processing unit 5 according to the ES read-out position detected by the ES read-out position detecting unit 3. The storing unit 7 stores contents to be described later shown in FIG. 3, for example. Namely, the stuff control directing unit 6 refers to the contents stored in the storing unit 7 to obtain the stuff control amounts to be used in the OPU2/ODU2 processing unit 4 and the ODTU processing unit 5 according to the ES read-out position detected as the count value by the ES read-out position detecting unit 3, and directs the OPU2/ODU2 processing unit 4 and/or the ODTU processing unit 5 to perform the stuff control.

Accordingly, the stuff control directing unit 6 and the storing unit 7 in each of the 10G modules 11 through 14 configure a stuff allocation controlling unit 20 which allocates a stuff control amount to be used when the local protocol signal is accommodated in the OPU2/ODU2 signal by the OPU2/ODU2 processing unit 4 and a stuff control amount to be used when the ODTU signal is generated by the ODTU processing unit 5, on the basis of the read-out position detected by the ES read-out position detecting unit 3.

The external memory 17 stores the stuff control amounts to be used in the OPU2/ODU2 processing unit 4 and the ODTU processing unit 5 according to the ES read-out position in each of the 10G modules 11 through 14. The contents stored in the external memory 17 are loaded into the storing unit 7 when the signal multiplexing apparatus 10 is started.

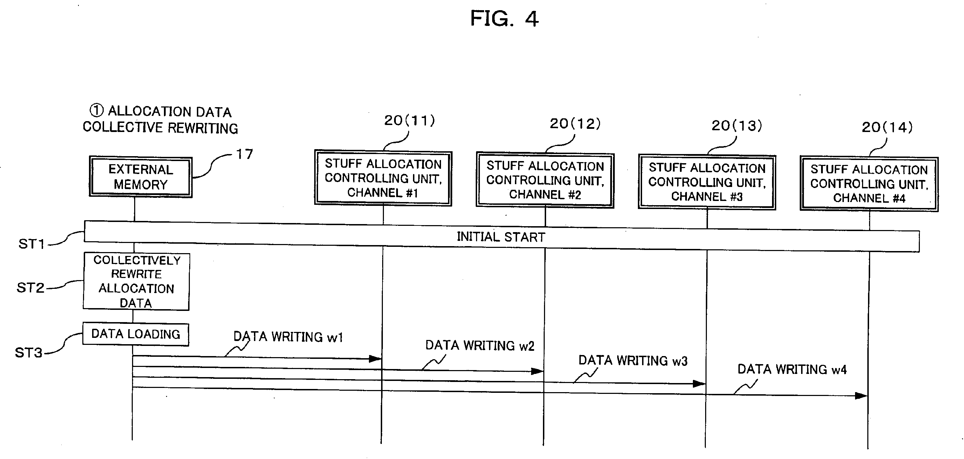

As shown in FIG. 4, for example, when the signal multiplexing apparatus 10 is started (step ST1), the stuff allocation controlling units 20 in the 10G modules 11 through 14 (channels #1 through #4)collectively load information on the stuff control in the OPU2/ODU2 processing unit 4 and the ODTU processing unit 5 (steps ST2 and ST3). Namely, information on the stuff control stored in the storage 17 is written in the storing unit 7 in each of the 10G modules 11 through 14 by means of the stuff control directing unit 6 (refer to w1 through w4). Whereby, it becomes possible to freely and collectively take in allocation data of the stuff control in the stuff allocation controlling unit 20 for four channels from the external memory 17 in the initial setting, and allocate a stuff control amount freely and variably within a range of ±160ppm.

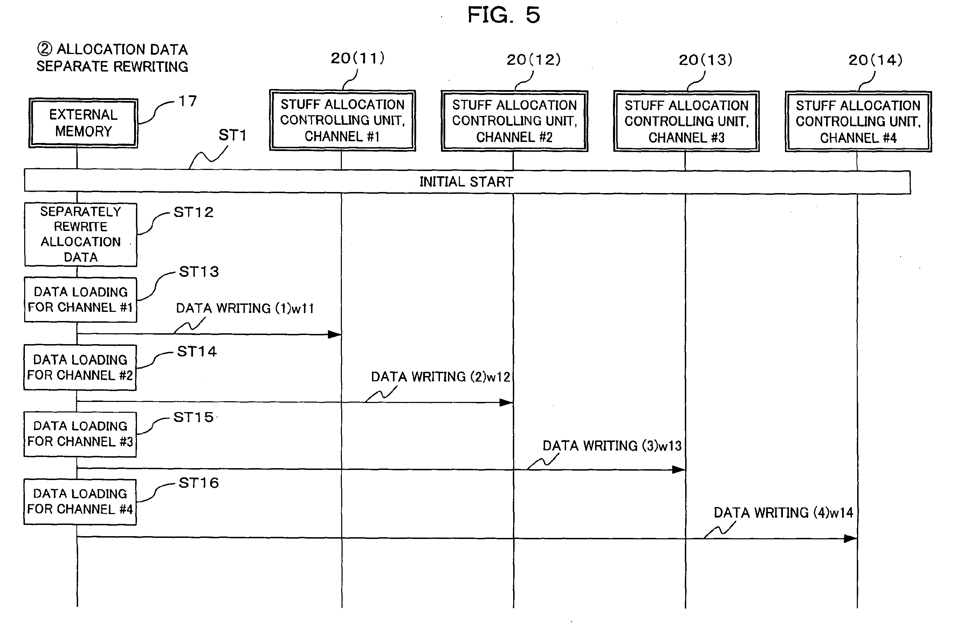

Alternatively, as shown in FIG. 5, when the signal multiplexing apparatus 10 is started (step ST1), the stuff allocation controlling unit 20 in each of the 10G modules 11 through 14 loads, separately and successively, information on the stuff control in the OPU2/ODU2 processing unit 4 and the ODTU processing unit 5 in its own 10G module 11, 12, 13 or 14 (steps ST12 through ST16). Namely, information on the stuff control stored in the storage 17 is successively written in the storing unit 7 in each of the 10G modules 11 through 14 by means of the corresponding stuff control directing unit 6 (refer to w11 through w14). Whereby, it becomes possible to freely take in the allocation data for the stuff control in the stuff allocation controlling unit 20 on a required channel from the external memory 17 in the initial setting, and allocate, freely and variably, a staff control amount within a range of ±160ppm.

By allocating a stuff control amount to be used in the OPU2/ODU2 processing unit 4 and a stuff control amount to be used in the ODTU processing unit 5 by the stuff allocation controlling unit 20, it becomes possible to absorb the fluctuation amount of the bit rate of a local protocol signal such as the 10GE signal when a signal in OTU3 frame is formed, which has been difficult to be absorbed when a signal in OTU3 frame is formed in the known apparatus performing separately the stuff control.

In other words, the stuff allocation controlling unit 20 allocates the amount of stuff control using the JC bytes in the OPU2/ODU2 processing unit 4 and the ODTU processing unit 5 not independently but in cooperation, thereby absorbing a fluctuation amount of a maximum of approximately ±160ppm in the 10 Gb/s signal group, as shown below. For example, since the fluctuation amount of the 10GE signal is ± 100 ppm as described above, the fluctuation amount of the 10GE signal can be certainly absorbed under the allocation of the stuff control by the stuff allocation controlling unit 20.

Namely, $\alpha$ (justification ratio) is obtained as shown below according to ITU-T G.709 APPENDIX I:

$-1 \leqq \alpha \leqq 1$ for CBR client into ODUk mapping (STM64 → ODU2)

$\alpha \leqq 1$ for ODUj into ODUk mapping (k>j) (ODU2 → ODU3)

※ positive $\alpha$ will correspond to negative justification and negative $\alpha$ will correspond to positive justification

When the frame form is changed and the signal is asynchronously multiplexed as done STM64 → ODU2 → ODU3, the JC bytes at two position in the OPU2/ODU2 processing unit 4 and the ODTU processing unit 5 are combined and used for the stuff control, whereby $-3 \leqq \alpha \leqq 2$ .

$\alpha$ and y (frequency offset) can be denoted at (5) and (6) below ,which is derived from the equation (23) in ITU-T G.709 APPENDIX I:

$$\alpha = 4N - 0.5400844 + 15231.459916y \quad \dots (5)$$

$$y = (\alpha - 4N + 0.5400844)/15231.459916 \quad \dots (6)$$

Within the above range of $-3 \leqq \alpha \leqq 2$, when 0 is substituted in N (N=0), which is the number of fixed stuff bytes, and -3 is substituted for $\alpha$ ($\alpha$ =-3), Y=-161.50ppm. By substituting for N=0 and $\alpha$ =2 in the equation (6), Y=166.77ppm is obtained. Accordingly, $-161.50\text{ppm} \leqq y \leqq 166.77\text{ppm}$ within a range of $-3 \leqq \alpha \leqq 2$, thus a fluctuation in equal to Y value can be allowed.

FIG. 3 shows an example of the stuff control amount information stored in the storing unit 7 used to absorb a fluctuation amount of the above frequency difference y within a range from -161.50ppm to 166.77ppm (y= -161.50 - 166.77ppm). As shown in FIG. 3, the storing unit 3 stores the polarity and the number of bytes of the stuff control for each of the OPU2/ODU2 processing unit 4 and the ODTU processing unit 5.In concretely when the count value from the ES read-out position detecting unit 3 is a count value (500) corresponding to a frequency difference y of 35.46ppm (y = 35.46ppm), use of the stuff in ODUT23 is "NO," and use of the stuff in ODU2 is "NO," which signify that the stuff control in both the OPU2/ODU2 processing unit 4 and the ODTU processing unit 5 is not performed (0 stuff). Incidentally, $\alpha$ corresponding to the above frequency difference y=35.46ppm is "0."

When the count value from the ES read-out position detecting unit 3 is a count value corresponding to a frequency difference y within a range from 34.80 to -30.20ppm (y = 34.80 to -30.20ppm), use of the stuff in ODUT23 is "YES," use of the stuff in ODU2 is "NO," the ODTU processing unit 5 performs the positive stuff control of one byte, and the OPU2/ODU2 processing unit 4 does not perform the stuff control (positive 1 stuff). The storing unit 7 also stores a value of frame cycles for performing the stuff control in each of the OPU2/ODU2 processing unit 4 and the ODTU processing unit 5,corresponding to the above frequency difference. When y=34.80ppm, for example, the stuff control is performed once every 400 frames. When y=-30.20ppm, the stuff control is performed once every 4.0 frames.

Responsive to a direction from the stuff control directing unit 6, the ODTU processing unit 5 performs the positive stuff of one byte, using the JC byte in the ODTU23 frame in a cycle corresponding to a frequency difference y. Incidentally, as a cycle in which the above positive stuff control is performed, the values of $\alpha$ corresponding to the above frequency differences from 34.80 to -30.20ppm (y = 34.80 to -30.20ppm) are -0.01 to -1.00 ($\alpha$ = -0.01 to -1.00).

When the count value from the ES read-out position detecting unit 3 is a count value corresponding to a frequency difference y within a range from -43.33 to -95.85ppm (y = -43.33 to -95.85ppm), the setting is that use of the stuff in ODUT 23 is "YES," use of the stuff in ODU2 is "NO," only the ODTU processing unit 5 performs the positive stuff control of two bytes, and the OPU2/ODU2 processing unit 4 does not perform the stuff control (positive 2 stuff). The storing unit 7 stores a value of frame cycles corresponding to the frequency difference y in which the ODTU processing unit 5 performs the stuff control. For example, the storing unit 7 stores that when y=-43.33ppm, the stuff control is performed once every 3.3 frames, and that when y=-95.85ppm, the stuff control is performed once every 2.0 frames.

As the stuff control by the ODTU processing unit 5 in this case, the ODTU processing unit 5 performs the positive stuff control of two bytes, using the JC bytes in ODTU23 frame, in response to a direction from the stuff control directing unit 6. Incidentally, the values of $\alpha$ corresponding to the above frequency differences from -43.33 to -95.85ppm (y = -43.33 to -95.85ppm) are -1.20 to -2.00 ($\alpha$ = -1.20 to -2.00).

When the count value from the ES read-out position detecting unit 3 is a count value corresponding to a frequency difference y within a range from -108.99 to -161.50ppm (y = -108.98ppm to -161.50ppm), the setting is that use of the stuff in ODUT 23 is "YES," use of the stuff in ODU 2 is "YES," the ODTU processing unit 5 performs the positive stuff control of two byes, and the OPU2/ODU2 processing unit 4 performs the positive stuff control of one byte.

In other words, the setting is the positive stuff control of three bytes (2+1=3 bytes) (positive 3 stuff). The storing unit stores a frame cycle in which the OPU2/ODU2 processing unit 4 and the ODTU processing unit 5 perform the stuff control, according to the frequency difference y. For example, when y=-108.98ppm, the stuff control is performed once every 3.6 frames. When y=-161.50ppm, the stuff control is performed once every 2.7 frames. Incidentally, the values of $\alpha$ corresponding to the above frequency differences from -108.98 to 161.50ppm (y = -108.98 to -161.50ppm) are -2.20 to -3.00 ($\alpha$ = 2.20 to -3.00).

When the count value from the ES read-out position detecting unit 3 is a count value corresponding to a frequency difference y within a range from 36.12 to 101.11ppm (y=36.12 to 101.11ppm), the setting is that use of the stuff in ODUT 23 is "YES," use of the stuff in ODU2 is "NO," only the ODTU processing unit 5 performs the negative stuff control of one byte, and the OPU2/ODU2 processing unit 4 does not perform the stuff control (negative 1 stuff). The storing unit 7 stores a frame cycle in which the ODTU processing unit 5 performs the stuff control, according to the frequency difference y. For example, when y=36.12ppm, the stuff control is performed once every 400 frames. When y=101.11ppm, the stuff control is performed once every 4.0 frames.

In this case, the ODTU processing unit 5 performs the negative stuff control of one byte, using the JC byte in ODTU23 frame in a cycle corresponding to the frequency difference y in responsive to a direction from the stuff control directing unit 6. As the cycle in which the above negative stuff control is performed, the values of $\alpha$ corresponding to the above frequency differences y from 36.12 to 101.11ppm (y = 36.12 to 101.11ppm) are 0.01 to 1.00 ($\alpha$ = 0.01 to 1.00).

When the count value from the ES read-out position detecting unit 3 is a count value corresponding to a frequency difference within a range from 114'.24 to 116.77ppm (y = 114.24 to 166. 77ppm), the setting is that use of stuff in ODUT 23 is "YES," use of stuff in ODU2 is "YES," the ODTU processing unit 5 performs the negative stuff control of one byte, and the OPU2/ODU2 processing unit 4 performs the negative stuff control of one byte. In other words, the setting is the negative stuff control of two bytes (1+1=2 bytes) (negative 2 stuff). The storing unit 7 stores a frame cycle in which the OPU2/ODU2 processing unit 4 and the ODTU processing unit 5 perform the stuff control according to the frequency difference y. For example, the stuff control is performed once every 6.7 frames when y=114.24ppm. The stuff control is performed once every 4.0 frames when y=166.77ppm. Incidentally, the values of $\alpha$ corresponding to the above frequency differences from 114.24 to 166.77ppm (y = 114.24 to 166.77ppm) are 1.20 to 2.00 ($\alpha$ = 1.20 to 2.00).

In FIG. 3, a case where only the ODTU processing unit 5 performs the stuff control is denoted as state A, whereas a case where both the OPU2/ODU2 processing unit 4 and the ODTU processing unit 5 perform the stuff control is denoted as state B, and a frame cycle in which the stuff control is performed is stored. Other than this, a count value condition in which only the OPU2/ODU2 processing unit 4 performs the stuff control may be set, or a different frame cycle in which both the OPU2/ODU2 processing unit 4 and the ODTU processing unit 5 perform the stuff control may be set, according to this invention.

The stuff control directing unit 6 refers to the contains in the storing unit 7 to adaptively allocate the stuff control in the OPU2/ODU2 processing unit 4 and the ODTU processing unit 5 on the basis of the count value according to the frequency difference y from the ES read-out position detecting unit 3, thereby absorbing the frequency difference y between the 10 Gb/s a signal group and the ODU2 signal within a range from -166.50 to 166.77ppm.

It is known that 0 stuff jitter might occur when the stuff control is not performed by the stuff control directing unit 6 at a value y of 35.46ppm and its neighboring values. In order to suppress the 0 stuff jitter, the storing unit 7 may store the number of sections for allocation so that the stuff control amount is allocated equally to, for example, every 10 frames in a frame cycle in which the stuff control of given one byte is performed, within ranges from 28.89 to 34.80ppm and 36.12 to 42.02ppm in the vicinity of the above frequency difference y where the stuff control is not performed.

In the above example, when the count value from the ES read-out position detecting unit 3 is a value corresponding to a frequency difference y of 28.89ppm (y = 28.89ppm), the ODTU23 processing unit 5 performs the positive stuff control of one byte once every 40 frames, for example. However, the positive stuff control of one byte may be equally allocated to every 10 frames. In such case, the stuff control directing unit 6 equally divides the 40 frames into four sections, and performs the positive stuff control of one byte.

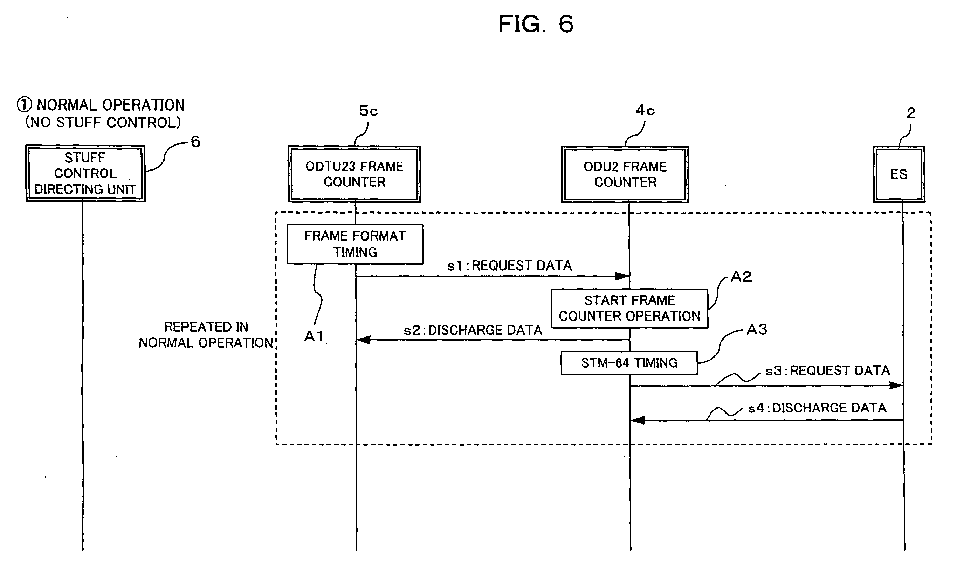

In the signal multiplexing apparatus 10 structured as above according to the first embodiment, each of the 10G modules 11 through 14 generates a signal in which an inputted 10 Gb/s a signal group is mapped in an ODTU23 frame. Namely, the ODTU23 frame counter 5c in the OTDU processing unit 5 requests the ODU2 frame counter 4c to supply data (refer to s1 in FIG. 6) according to the frame format (refer to step A1 in FIG. 6) shown in FIG. 13.

In the ODU2 frame counter 4c, the frame counter starts in response to the data request from the ODTU23 frame counter 5c (step A2), and a data discharging control, that is, a control to output the ODU2 signal from the OH/FS inserting unit 4b is performed (s2 in FIG. 6). When time to request an STM-64 signal comes (read timing) (step A3), the ODU2 frame counter 4c requests the ES 2 to supply data, and reads the data (refer to s3 and s4 in FIG. 6).

When the count value counted by the ES read-out position detecting unit 3 is "500," that is, a count value at which the stuff control is unnecessary, the stuff control directing unit 6 does not direct both the OPU2/ODU2 processing unit 4 and the ODTU processing unit 5 to perform the stuff control, as shown in FIG. 6.

When the count value counted by the ES read-out position detecting unit 3 is a count value corresponding to a frequency difference y within a range from 34.80 to -95.85pm or 36.12 to 101.11ppm (y = 34.80 to -95.85ppm or 36.12 to 101.11ppm), the stuff control directing unit 6 directs the ODTU processing unit 5 to perform the negative or positive stuff control of one or two bytes.

When the clock signal (Write CLK) having a frequency at which the 10 Gb/s signal group is written into the ES 2 is smaller than a clock signal (Read CLK) having a frequency at which the data signal is read out from the ES 2, that is, when the speed of Read CLK (336M CLK: clock discontinue control) on the ODTU23's side is faster than the Write CLK (311M CLK) on the writing side, the read-out position in the ES 2 is shifted toward the Empty's side shown in FIG. 2, little by little, and the remaining data amount accumulated in the ES2 is decreased.

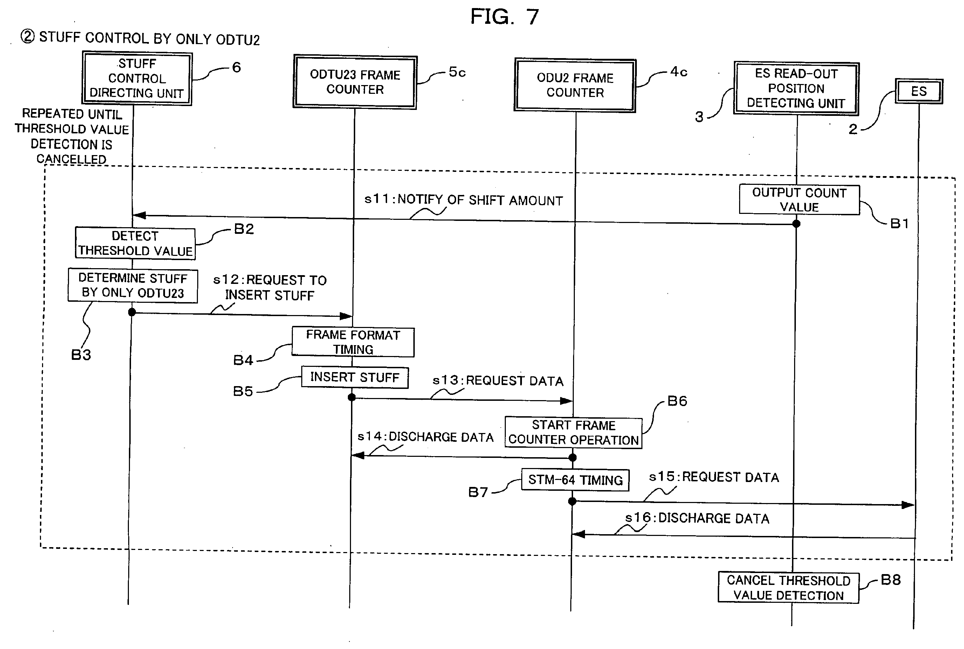

The ES read-out position detecting unit 3 monitors at all times the reading position in the ES 2, and confirms the shift amount toward the Empty's side in FIG. 2. Since data loss occurs when the read-out position is further shifted toward the Empty's side, the stuff control is performed to save the data. In concrete, as shown in FIG. 7, the stuff control directing unit 6 receives a count value (step B1, s11 "notify of shift amount") from the ES read-out position detecting unit 3. When the count value is a count value corresponding to y=34.80ppm, which is a threshold value for the positive stuff control (step B2), the stuff control directing unit 6 directs the ODTU23 frame counter 5c to perform the stuff control according to the frame cycle stored in the storing unit 7 (step B3, s12 "request to insert stuff").

According to the frame format shown in FIG. 13 (refer to step B4), the ODTU23 frame counter 5c in the ODTU processing unit 5 inserts (a) necessary stuff byte (s) based on the stuff control by the stuff control directing unit 6 (step B5), and requests the ODU2 frame counter 4c to supply data (refer to s13 in FIG. 6). In the ODU2 frame counter 4c, the frame counter is started in response to the data request from the ODTU23 frame counter 5c (step B6) like the case shown in FIG. 6, and a control to discharge the data is performed (s14 in FIG. 6). When time (read timing) to request an STM-64 signal comes (step B7), the ODU2 frame counter 4c requests the ES 2 to supply data and reads the data (refer to s15 and s16 in FIG. 6). Until the threshold value detection is cancelled in the ES read-out position detecting unit 3, that is, until the count value becomes a value where the stuff control is unnecessary (for example, until the count value becomes "500") (step B8), the above stuff control is performed in a frame cycle according to the count value.

The stuff control directing unit 6 determines the number of bytes to be used in the stuff control by the ODTU 23 frame counter 5c and whether or not the stuff control is has to be performed in both the ODTU23 frame counter 5c and the ODU2 frame counter 4c.

In this case, the stuff control directing unit 6 directs the ODTU23 frame counter 5c to perform the positive stuff control of one byte when the count value is a count value corresponding to a frequency difference y within a range from 34.80 to -30.20ppm (y = 34.80 to -30.20ppm), directs the ODTU23 frame counter 5c to perform the positive stuff control of two bytes when the count value is a count value corresponding to a frequency difference y within a range from -43.33 to -95.85ppm (y = -43.33 to -95.85ppm), or directs the ODTU23 frame counter 5c to perform the negative stuff control of one byte when the count value is a count value corresponding to a frequency difference y within a range from 36.12 to 101.11ppm) (y = 36.12 to 101.11ppm).

When the count value is a count value corresponding to a frequency difference (for example, within a range from 28.89 to 42. 02ppm) in the vicinity of a frequency difference corresponding to a count value "500" at which both the OPU2/ODU2 processing unit 4 and the ODTU processing unit 5 are not directed to perform the stuff control, the positive or negative stuff control of one byte is performed in a frame cycle according to that frequency difference. Within a region of count values corresponding to these frequency differences, the stuff control of a byte is uniformly allocated in sections of a predetermined length (for example, 10 frame length) in a frame cycle in which the stuff control of a byte in number corresponding to the count value is performed, thereby to suppress the 0 stuff jitter.

In this case, the stuff control directing unit 6 directs the ODTU processing unit 5 to perform the stuff control so that the stuff control of (a) byte(s) in a set number is uniformly allocated to sections within the frame cycle on the basis of the contents in the storing unit 7.

When the count value of a count value corresponding to a frequency difference y falls within a range from -108.98 to -161.50 (y = -108.98 to 161.50ppm), the stuff control directing unit 6 directs the ODTU23 frame counter 5c to perform the positive stuff of two bytes, while directing the ODU2 frame counter 4c to perform the positive control of one byte. When the count value is a count value corresponding to a frequency difference y within a range from 114.24 to 166.77ppm (y=114.24 to 166.77ppm), the stuff control directing unit 6 directs the ODTU 23 frame counter 5c to perform the negative stuff control of one byte, while directing the ODU2 frame counter 4c to perform the negative counter of one byte.

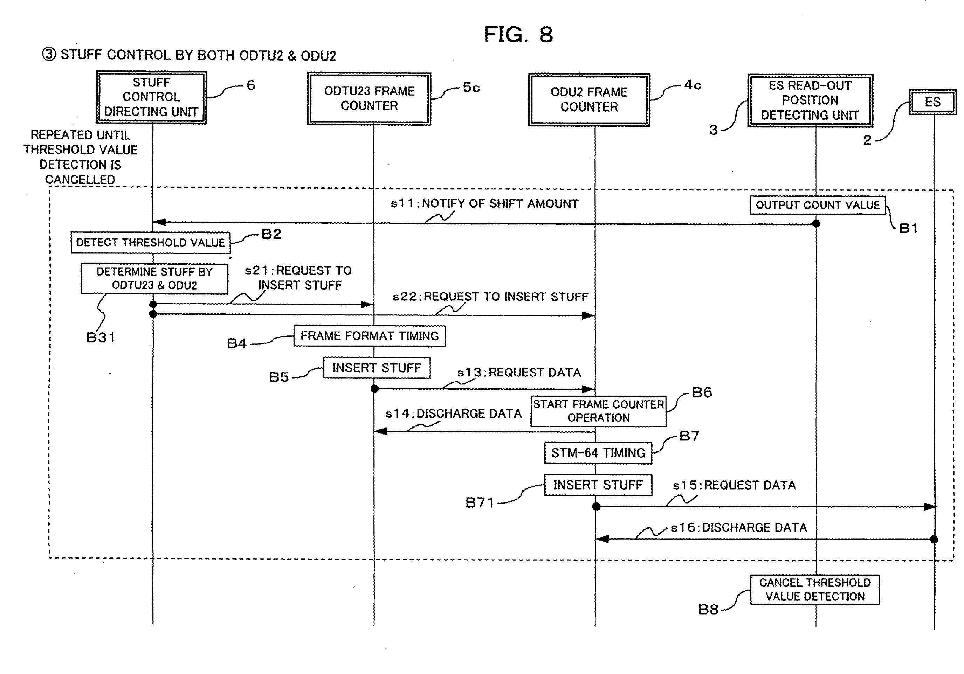

When directing both the ODTU23 frame counter 5c and the ODU2 frame counter 4c to perform the stuff control, the stuff control directing unit 6 outputs a stuff insert request separately to the ODTU23 frame counter 5c and the ODU2 frame counter 4c according to the frame cycle stored in the storing unit 7 (refer to steps B31, s21 and s22 in FIG. 8).

Like the case shown in FIG. 7, the ODTU23 frame counter 5c in the ODTU processing unit 5 inserts (a) necessary stuff byte(s) based on the stuff control direction from the stuff control directing unit 6 (steps B4 and B5), and requests the ODU2 frame counter to supply data (refer to s13 in FIG. 6). Like the case shown in FIG. 6, in the ODU2 frame counter 4c, the frame counter is started in response to the data request from the ODTU23 frame counter 5c (step B6), and a control to discharge the data is started (s14 in FIG. 6). When time to request an STM-64 signal (read timing) comes (step B7), the ODU2 frame counter 4c inserts (a) necessary stuff byte (s) based on the stuff control direction from the stuff control directing unit 6 (step B71), requests the ES 2 to supply data and reads the data (refer to s15 and s16 in FIG. 6). The above stuff control is continued in a frame cycle according to the count value until threshold value detection is cancelled in the ES read-out position detecting unit 3, that is, until the count value becomes a value at which the stuff control is unnecessary (in this case, until the count value becomes "500") (step B8).

When the count value outputted from the ES read-out position detecting unit 3 is "446," the frequency difference y is 0ppm, that is, the difference in frequency between the 10 Gb/s signal and the OTU3 is 0. In which case, the positive stuff control of one byte is performed in the OTDU processing unit 5 once every 7.4 frames. Since this example employs 32-bit (4-byte) parallel signal, a process of one round is completed when the positive stuff control of four bytes (1 byte X 4 = 4 bytes) is performed.

When the count value outputted from the ES read-out position detecting unit 3 is "200," the frequency difference y is -161.5ppm, that is, a difference in frequency between the 10 Gb/s a signal group and the OTU3 is -161.5ppm. In which case, the positive stuff control of a sum of three bytes is performed in the OPU2/ODU2 processing unit 4 and the OTDU processing unit 5 once every 2.7 frames. Since this example employs 32-bit (4-byte) parallel signal, the process of one round is completed when the positive stuff control of 12 bytes (3 bytes X 4 = 12 byte) is performed.

When the count value outputted from the ES read-out position detecting unit 3 is "700," the frequency difference y is 166.77ppm, that is, a difference in frequency between the 10 Gb/s a signal group and the OTU3 is 166.77ppm. In which case, the negative stuff control of a sum of two bytes is performed in the OPU2/ODU2 processing unit 2 and the OTDU processing unit 5 once every 4.0 frames. Since this example employs 32-bit (4-byte) parallel signal, the process of one round is completed when the negative stuff control of eight bytes (2 bytes X 4 = 8 bytes) is performed.

According to the embodiment of this invention, the stuff allocation controlling unit 20 can allocate a stuff control amount to be used when a local protocol signal is accommodated in an OPU2/ODU2 signal by the OPU2/ODU2 processing unit 4 and a stuff control amount to be used when the ODTU23 signal is generated by the ODTU processing unit 5, on the basis of the read-out position detected by the read-out position detecting unit 3. Accordingly, it is possible to absorb efficiently an amount of fluctuation in bit rate when a local protocol signal such as a 10GE signal is asynchronously multiplexed in an optical transport network, by using, efficiently and rationally, bytes for the stuff control given to OPU2/ODU2 and ODTU23.

## Claims

1. A signal multiplexing apparatus for multiplexing an OPU/ODU (Optical channel Payload Unit/Optical channel Data unit) signal in an optical transport network (OTN) comprising:

an OPU/ODU processing unit (4) for putting a local protocol signal in an OPU/ODU signal coping with a speed of the local protocol signal;

an ODTU processing unit (5) for generating an ODTU signal from the OPU/ODU signal accommodating the local protocol signal;

a read-out position detecting unit (3) for detecting a read-out position at the time that said OPU/ODU processing unit (4) reads out the local protocol signal; and

a stuff allocation controlling unit (20) for allocating a stuff control amount to be used when said OPU/ODU processing unit (4) puts the local protocol signal in the OPU/ODU signal and a stuff control amount to be used when said ODTU processing unit (5) generates the ODTU signal, on the basis of the read-out position detected by said read-out position detecting unit (3).

2. The signal multiplexing apparatus according to claim 1 further comprising:

a buffer in which the local protocol signal to be fed to said OPU/ODU processing unit (4) is written at a clock in synchronism with a speed of the local protocol signal and held;

wherein said OPU/ODU processing unit (4) reads out the local protocol signal written in said buffer at a clock in synchronism with a speed of the OPU/ODU signal; and

said read-out position detecting unit (3) detects a read-out position at the time that said OPU/ODU processing unit (4) reads out the local protocol signal from said buffer as the read-out position.

3. The signal multiplexing apparatus according to claim 2, wherein said read-out position detecting unit (3) outputs a value corresponding to a difference between a clock frequency in synchronism with the speed of the local protocol signal and a clock frequency in synchronism with the speed of the OPU/ODU signal as the read-out position.

4. The signal multiplexing apparatus according to any one of claims 1 through 3, wherein said stuff allocation controlling unit (20) comprises:

a storing unit (7) for storing the stuff control amount to be used when said OPU/ODU processing unit (4) puts the local protocol signal in the OPU/ODU signal and the stuff control amount to be used when said ODTU processing unit (5) generates the ODTU signal, on the basis of the read-out position detected by said read-out position detecting unit (3); and

a stuff control directing unit (6) referring to contents stored in said storing unit (7) on the basis of the read-out position detected by said read-out position detecting unit (3) to direct said OPU/ODU processing unit (4) and said ODTU processing unit (5) to perform a stuff control.

5. The signal multiplexing apparatus according to claim 4, wherein said storing unit (7) stores a polarity, the number of bytes used in the stuff control performed by said OPU/ODU processing unit (5) and said ODTU processing unit (5) and a frame cycle in which the stuff control is performed, according to the read-out position detected by said read-out position detecting unit (3).

6. The signal multiplexing apparatus according to claim 5, wherein said storing unit (7) stores the number of sections so as to equally allocate the number of bytes used in the stuff control within the frame cycle when the read-out position is in the neighborhood of a read-out position at which the stuff control by said OPU/ODU processing unit (4) and said ODTU processing unit (5) is set not to be performed;

said stuff control directing unit (6) directs said OPU/ODU processing unit (4) and said ODTU processing unit (5) to perform the stuff control so that the stuff control using the number of bytes in said number is equally allocated over the sections in the set number within the frame cycle on the basis of the contents of said storing unit (7).

7. The signal multiplexing apparatus according to claim 4, wherein a set of said OPU/ODU processing unit (4), said ODTU processing unit (5) and said stuff allocation controlling unit (20) is provided in number corresponding to the number of channels of the OPU/ODU signal to be multiplexed; and

said storing unit (7) in said stuff allocation controlling unit (20) in each of the sets stores stuff control amount information for the stuff control by said OPU/ODU processing unit (4) and said ODTU processing unit (5) in a relevant channel.

8. The signal multiplexing apparatus according to claim 7 further comprising an external memory (17) for storing collectively settings of the stuff control by the respective sets of said OPU/ODU processing unit (5) and said ODTU processing unit (5);
wherein said stuff allocation controlling units (20) on the respective channels capture the settings of the stuff control by the sets of said OPU/ODU processing unit (4) and said ODTU processing unit (5) at the time of a start.

9. The signal multiplexing apparatus according to claim '7 further comprising an external memory (17) for storing separately a setting of the stuff control by each of the sets of said OPU/ODU processing unit (5) and said ODTU processing unit (5);
wherein said stuff allocation controlling unit (20) on each of the channels captures the setting of the stuff control by the set of said OPU/ODU processing unit (4) and said ODTU processing unit (5) at the time of a start.

10. The signal multiplexing apparatus according to any one of claims 1 through 9, wherein said local protocol signal is a 10 Gb/s Ethernet (registered trademark) signal.

11. The signal multiplexing apparatus according to claim 1, wherein said OPU/ODU processing unit (4) puts the local protocol signal in an OPU2/ODU2 signal which is the OPU/ODU signal coping with a speed of the local protocol signal;
the ODTU processing unit (5) generates an ODTU23 signal from the OPU/ODU signal accommodating the local protocol signal; and
the stuff allocation controlling unit (20) allocates a stuff control amount to be used when said OPU/ODU processing unit (4) puts the local protocol signal in the OPU2/ODU2 signal and a stuff control amount to be used when said ODTU processing unit (5) generates the ODTU23 signal, on the basis of the read-out position detected by said read-out position detecting unit (3).

12. The signal multiplexing apparatus according to any one of claims 1 through 10 further comprising a multiplexing unit for multiplexing the ODTU signal generated by said ODTU processing unit (5).

13. A stuff controlling method in a signal multiplexing apparatus multiplexing an OPU/ODU (Optical channel Payload Unit/Optical channel Data Unit) signal in an optical transport network (OTN) comprising the steps of:

capturing once each of local protocol signals in a buffer, successively reading out the local protocol signal, putting the local protocol signal in an OPU/ODU signal coping with a speed of the local protocol signal;
generating an ODTU signal from the OPU/ODU signal accommodating the local protocol signal;
detecting a read-out position of the local protocol signal at the time that the local protocol signal captured in said buffer is read out; and
allocating a stuff control amount to be used when the local protocol signal is accommodated in the OPU/ODU signal and a stuff control amount to be used when the ODTU signal is generated, on the basis of the read-out position.

**Amended claims in accordance with Rule 86(2) EPC.**

1. A signal multiplexing apparatus for multiplexing an OPU/ODU, Optical channel Payload Unit/Optical channel Data Unit, signal in an optical transport network, OTN, comprising:

an OPU/ODU processing unit (4) for putting a local protocol signal in an OPU/ODU signal having a corresponding speed to the local protocol signal;
an ODTU processing unit (5) for generating an ODTU signal from the OPU/ODU signal accommodating the local protocol signal;
a frequency difference detecting unit (3) for detecting a difference between a first frequency in synchronism with the speed of the local protocol signal and a second frequency in synchronism with the speed of the OPU/ODU signal; and
a stuff allocation controlling unit (20) for allocating a stuff control amount to be used when said OPU/ODU processing unit (4) puts the local protocol signal in the OPU/ODU signal and a stuff control amount to be used when said ODTU processing unit (5) generates the ODTU signal, on the basis of the frequency difference detected by said frequency difference detecting unit (3).

2. The signal multiplexing apparatus according to claim 1 further comprising:

a buffer in which the local protocol signal to be fed to said OPU/ODU processing unit (4) is written at a clock in synchronism with a speed of the local protocol signal and held;

wherein said OPU/ODU processing unit (4) reads out the local protocol signal written in said buffer at a clock in synchronism with a speed of the OPU/ODU signal; and

said frequency difference detecting unit (3) detects a read-out position at the time that said OPU/ODU processing unit (4) reads out the local protocol signal from said buffer as the frequency difference.

**3.** The signal multiplexing apparatus according to claim 2, wherein said frequency difference detecting unit (3) outputs a value corresponding to a difference between a clock frequency in synchronism with the speed of the local protocol signal and a clock frequency in synchronism with the speed of the OPU/ODU signal as the frequency difference.

**4.** The signal multiplexing apparatus according to any one of claims 1 through 3, wherein said stuff allocation controlling unit (20) comprises:

a storing unit (7) for storing the stuff control amount to be used when said OPU/ODU processing unit (4) puts the local protocol signal in the OPU/ODU signal and the stuff control amount to be used when said ODTU processing unit (5) generates the ODTU signal, on the basis of the frequency difference detected by said frequency difference detecting unit (3); and

a stuff control directing unit (6) referring to contents stored in said storing unit (7) on the basis of the frequency difference detected by said frequency difference detecting unit (3) to direct said OPU/ODU processing unit (4) and said ODTU processing unit (5) to perform a stuff control.

**5.** The signal multiplexing apparatus according to claim 4, wherein said storing unit (7) stores a polarity, the number of bytes used in the stuff control performed by said OPU/ODU processing unit (5) and said ODTU processing unit (5) and a frame cycle in which the stuff control is performed, according to the frequency difference detected by said frequency difference detecting unit (3).

**6.** The signal multiplexing apparatus according to claim 5, wherein said storing unit (7) stores the number of sections so as to equally allocate the number of bytes used in the stuff control within the frame cycle when the read-out position is in the neighborhood of a frequency difference at which the stuff control by said OPU/ODU processing unit (4) and said ODTU processing unit (5) is set not to be performed;

said stuff control directing unit (6) directs said OPU/ODU processing unit (4) and said ODTU processing unit (5) to perform the stuff control so that the stuff control using the number of bytes in said number is equally allocated over the sections in the set number within the frame cycle on the basis of the contents of said storing unit (7).

**7.** The signal multiplexing apparatus according to claim 4, wherein a set of said OPU/ODU processing unit (4), said ODTU processing unit (5) and said stuff allocation controlling unit (20) is provided in number corresponding to the number of channels of the OPU/ODU signal to be multiplexed; and

said storing unit (7) in said stuff allocation controlling unit (20) in each of the sets stores stuff control amount information for the stuff control by said OPU/ODU processing unit (4) and said ODTU processing unit (5) in a relevant channel.

**8.** The signal multiplexing apparatus according to claim 7 further comprising an external memory (17) for storing collectively settings of the stuff control by the respective sets of said OPU/ODU processing unit (5) and said ODTU processing unit (5);

wherein said stuff allocation controlling units (20) on the respective channels capture the settings of the stuff control by the sets of said OPU/ODU processing unit (4) and said ODTU processing unit (5) at the time of a start.

**9.** The signal multiplexing apparatus according to claim 7 further comprising an external memory (17) for storing separately a setting of the stuff control by each of the sets of said OPU/ODU processing unit (5) and said ODTU processing unit (5);

wherein said stuff allocation controlling unit (20) on each of the channels captures the setting of the stuff control by the set of said OPU/ODU processing unit (4) and said ODTU processing unit (5) at the time of a start.

**10.** The signal multiplexing apparatus according to any one of claims 1 through 9, wherein said local protocol signal is a 10 Gb/s Ethernet signal.

**11.** The signal multiplexing apparatus according to claim 1, wherein said OPU/ODU processing unit (4) puts the local protocol signal in an OPU2/ODU2 signal which is the OPU/ODU signal coping with a speed of the local protocol signal;

the ODTU processing unit (5) generates an ODTU23 signal from the OPU/ODU signal accommodating the local protocol signal; and

the stuff allocation controlling unit (20) allocates a stuff control amount to be used when said OPU/ODU processing unit (4) puts the local protocol signal in the OPU2/ODU2 signal and a stuff control amount to be used when said ODTU processing unit (5) generates the ODTU23 signal, on the basis of the frequency difference detected by said frequency difference detecting unit (3).

**12.** The signal multiplexing apparatus according to any one of claims 1 through 10 further comprising a multiplexing unit for multiplexing the ODTU signal generated by said ODTU processing unit (5).

**13.** A stuff controlling method in a signal multiplexing apparatus multiplexing an OPU/ODU, Optical channel Payload Unit/Optical channel Data Unit, signal in an optical transport network, OTN, comprising the steps of:

capturing once each of local protocol signals in a buffer, successively reading out the local protocol signal, putting the local protocol signal in an OPU/ODU signal having a corresponding speed to the local protocol signal; generating an ODTU signal from the OPU/ODU signal accommodating the local protocol signal;

detecting a difference between a first frequency in synchronism with the speed of the local protocol signal and a second frequency in synchronism with the speed of the OPU/ODU signal; and

allocating a stuff control amount to be used when the local protocol signal is accommodated in the OPU/ODU signal and a stuff control amount to be used when the ODTU signal is generated, on the basis of the detected frequency difference.

# FIG. 1

EP 1 770 886 A1

# FIG. 2

| EMPTY | POSITIVE STUFF | CLOCK DISCONTINUE REGION | NEGATIVE STUFF | FULL |
|-------|----------------|--------------------------|----------------|------|

0    200            ⟵                500              ⟶            700        1000

COUNT VALUE

## FIG. 3

7

| STUFF STATE | USE OF STUFF | | α (Justification ratio) | FREQUENCY OFFSET y(ppm) | STUFF-APPLIED FRAME CYCLE | | EQUAL DIVISION SECTION (PER 10 FRAMES) |
|---|---|---|---|---|---|---|---|
| | ODUT23 YES | ODU2 NO | | | STATE A | STATE B | |
| POSITIVE 3 STUFF | YES | YES | −3.00 | −161.50 | | 2.7 | |
| | YES | YES | −2.80 | −148.37 | | 2.9 | |
| | YES | YES | −2.60 | −135.24 | | 3.1 | |
| | YES | YES | −2.40 | −122.11 | | 3.3 | |
| | YES | YES | −2.20 | −108.98 | | 3.6 | |
| POSITIVE 2 STUFF | YES | NO | −2.00 | −95.85 | 2.0 | | |
| | YES | NO | −1.80 | −82.72 | 2.2 | | |
| | YES | NO | −1.60 | −69.59 | 2.5 | | |
| | YES | NO | −1.40 | −56.46 | 2.9 | | |
| | YES | NO | −1.20 | −43.33 | 3.3 | | |
| POSITIVE 1 STUFF | YES | NO | −1.00 | −30.20 | 4.0 | | |
| | YES | NO | −0.80 | −17.06 | 5.0 | | |
| | YES | NO | −0.60 | −3.93 | 6.7 | | |
| | YES | NO | −0.54 | 0.00 | 7.4 | | |
| | YES | NO | −0.40 | 9.20 | 10.0 | | |
| | YES | NO | −0.30 | 15.76 | 13.3 | | |
| | YES | NO | −0.20 | 22.33 | 20.0 | | |
| | YES | NO | −0.18 | 23.64 | 22.2 | | |
| | YES | NO | −0.16 | 24.95 | 25.0 | | |
| | YES | NO | −0.14 | 26.27 | 28.6 | | |
| | YES | NO | −0.12 | 27.58 | 33.3 | | |
| | YES | NO | −0.10 | 28.89 | 40.0 | | 4 |
| | YES | NO | −0.09 | 29.55 | 44.4 | | 4.444444444 |
| | YES | NO | −0.08 | 30.21 | 50.0 | | 5 |
| | YES | NO | −0.07 | 30.86 | 57.1 | | 5.714285714 |
| | YES | NO | −0.06 | 31.52 | 66.7 | | 6.666666667 |
| | YES | NO | −0.05 | 32.18 | 80.0 | | 8 |
| | YES | NO | −0.04 | 32.83 | 100.0 | | 10 |
| | YES | NO | −0.03 | 33.49 | 133.3 | | 13.33333333 |
| | YES | NO | −0.02 | 34.15 | 200.0 | | 20 |
| | YES | NO | −0.01 | 34.80 | 400.0 | | 40 |
| 0 STUFF | NO | NO | 0.00 | 35.46 | | | |
| | YES | NO | 0.01 | 36.12 | 400.0 | | 40 |
| | YES | NO | 0.02 | 36.77 | 200.0 | | 20 |
| | YES | NO | 0.03 | 37.43 | 133.3 | | 13.33333333 |
| | YES | NO | 0.04 | 38.08 | 100.0 | | 10 |
| | YES | NO | 0.05 | 38.74 | 80.0 | | 8 |
| | YES | NO | 0.06 | 39.40 | 66.7 | | 6.666666667 |
| | YES | NO | 0.07 | 40.05 | 57.1 | | 5.714285714 |
| | YES | NO | 0.08 | 40.71 | 50.0 | | 5 |
| | YES | NO | 0.09 | 41.37 | 44.4 | | 4.444444444 |
| | YES | NO | 0.10 | 42.02 | 40.0 | | 4 |
| | YES | NO | 0.12 | 43.34 | 33.3 | | |
| | YES | NO | 0.14 | 44.65 | 28.6 | | |
| | YES | NO | 0.16 | 45.96 | 25.0 | | |
| | YES | NO | 0.18 | 47.28 | 22.2 | | |
| | YES | NO | 0.20 | 48.59 | 20.0 | | |
| | YES | NO | 0.30 | 55.15 | 13.3 | | |
| | YES | NO | 0.40 | 61.72 | 10.0 | | |
| | YES | NO | 0.60 | 74.85 | 6.7 | | |
| NEGATIVE 1 STUFF | YES | NO | 0.80 | 87.98 | 5.0 | | |
| | YES | YES | 1.00 | 101.11 | 4.0 | | |
| | YES | YES | 1.20 | 114.24 | | 6.7 | |
| | YES | YES | 1.40 | 127.37 | | 5.7 | |
| | YES | YES | 1.60 | 140.50 | | 5.0 | |
| NEGATIVE 2 STUFF | YES | YES | 1.80 | 153.63 | | 4.4 | |
| | YES | YES | 2.00 | 166.77 | | 4.0 | |

# FIG. 4

① ALLOCATION DATA
COLLECTIVE REWRITING

|  | 20(11) | 20(12) | 20(13) | 20(14) |
|---|---|---|---|---|
| EXTERNAL MEMORY  ⌒17 | STUFF ALLOCATION CONTROLLING UNIT, CHANNEL #1 | STUFF ALLOCATION CONTROLLING UNIT, CHANNEL #2 | STUFF ALLOCATION CONTROLLING UNIT, CHANNEL #3 | STUFF ALLOCATION CONTROLLING UNIT, CHANNEL #4 |

ST1 — INITIAL START

ST2 — COLLECTIVELY REWRITE ALLOCATION DATA

ST3 — DATA LOADING

DATA WRITING w1

DATA WRITING w2

DATA WRITING w3

DATA WRITING w4

EP 1 770 886 A1

# FIG. 5

② ALLOCATION DATA SEPARATE REWRITING

| | 20(11) | 20(12) | 20(13) | 20(14) |
|---|---|---|---|---|
| EXTERNAL MEMORY ~17 | STUFF ALLOCATION CONTROLLING UNIT, CHANNEL #1 | STUFF ALLOCATION CONTROLLING UNIT, CHANNEL #2 | STUFF ALLOCATION CONTROLLING UNIT, CHANNEL #3 | STUFF ALLOCATION CONTROLLING UNIT, CHANNEL #4 |

ST1

INITIAL START

SEPARATELY REWRITE ALLOCATION DATA ~ST12

DATA LOADING FOR CHANNEL #1 ~ST13

DATA WRITING (1)w11

DATA LOADING FOR CHANNEL #2 ~ST14

DATA WRITING (2)w12

DATA LOADING FOR CHANNEL #3 ~ST15

DATA WRITING (3)w13

DATA LOADING FOR CHANNEL #4 ~ST16

DATA WRITING (4)w14

EP 1 770 886 A1

# FIG. 6

① NORMAL OPERATION
(NO STUFF CONTROL)

STUFF CONTROL DIRECTING UNIT — 6

5c
ODTU23 FRAME COUNTER

4c
ODU2 FRAME COUNTER

2
ES

FRAME FORMAT TIMING

s1: REQUEST DATA

START FRAME COUNTER OPERATION — A2

s2: DISCHARGE DATA          A1

REPEATED IN NORMAL OPERATION

STM-64 TIMING — A3

s3: REQUEST DATA

s4: DISCHARGE DATA

EP 1 770 886 A1

# FIG. 7

② STUFF CONTROL BY ONLY ODTU2

| STUFF CONTROL DIRECTING UNIT ~6 | ODTU23 FRAME COUNTER ~5c | ODU2 FRAME COUNTER ~4c | ES READ-OUT POSITION DETECTING UNIT | ES |

3
2

REPEATED UNTIL THRESHOLD VALUE DETECTION IS CANCELLED

s11:NOTIFY OF SHIFT AMOUNT

OUTPUT COUNT VALUE ~B1

DETECT THRESHOLD VALUE ~B2

DETERMINE STUFF BY ONLY ODTU23

s12:REQUEST TO INSERT STUFF

B3

FRAME FORMAT TIMING

B4

INSERT STUFF

B5

s13:REQUEST DATA

START FRAME COUNTER OPERATION B6

s14:DISCHARGE DATA

STM-64 TIMING

B7

s15:REQUEST DATA

s16:DISCHARGE DATA

CANCEL THRESHOLD VALUE DETECTION B8

EP 1 770 886 A1

# FIG. 8

③ STUFF CONTROL BY BOTH ODTU2 & ODU2

| STUFF CONTROL DIRECTING UNIT ~6 | ODTU23 FRAME COUNTER ~5c | ODU2 FRAME COUNTER ~4c | ES READ-OUT POSITION DETECTING UNIT | ES |

REPEATED UNTIL THRESHOLD VALUE DETECTION IS CANCELLED

s11:NOTIFY OF SHIFT AMOUNT

OUTPUT COUNT VALUE — B1

DETECT THRESHOLD VALUE — B2

DETERMINE STUFF BY ODTU23 & ODU2 — B31

s21:REQUEST TO INSERT STUFF

s22:REQUEST TO INSERT STUFF

FRAME FORMAT TIMING — B4

INSERT STUFF — B5

s13:REQUEST DATA

START FRAME COUNTER OPERATION — B6

s14:DISCHARGE DATA

STM-64 TIMING — B7

INSERT STUFF — B71

s15:REQUEST DATA

s16:DISCHARGE DATA

CANCEL THRESHOLD VALUE DETECTION — B8

EP 1 770 886 A1

# FIG. 9

STM64/OC192
(9.953G±20ppm)

10G MSA MOD(1)  — 101

10G MSA MOD(2)  — 102

10G MSA MOD(3)  — 103

10G MSA MOD(4)  — 104

40G OTN Framer  — 105

43G MSA MOD  — 106

100

OTU3
(43.018G±20ppm)

FIG. 10

EP 1 770 886 A1

FIG. 11

EP 1 770 886 A1

# FIG. 12

Column
Row  15   16   17   18                    ..........................          3824

| Row | 15 | 16 | 17 | 18 | | 3824 |
|-----|-----|-----|-----|-----|-----|-----|
| 1 | RES | JC | | | | |
| 2 | RES | JC | | | | |
| 3 | RES | JC | | | | |
| 4 | PSI | NJO | PJO | | | |

OPUk OH ⟷ | ⟷ OPUk payload (4 × 3808 bytes)              T1542770-00

PSI
0  | PT
1  |
   | RES
255 |

JC | 1 2 3 4 5 6 7 8
   | Reserved | JC

EP 1 770 886 A1

# FIG. 13

**European Patent**
**Office**

**EUROPEAN SEARCH REPORT**

Application Number

EP 06 00 0472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ITU INTERNATIONAL TELECOMMUNICATION UNION: "Interfaces for the Optical Transport Network (OTN) G.709/Y.1331 (03/2003)" ITU-T RECOMMENDATION G.709/Y.1331, March 2003 (2003-03), page complete, XP002292965 * the whole document * | 1-9, 11-13 | H04J3/16 H04J3/07 |
| Y | US 2004/156325 A1 (PERKINS DREW D ET AL) 12 August 2004 (2004-08-12) * paragraph [0003] * * paragraph [0007] * * paragraph [0011] - paragraph [0014] * * paragraph [0016] - paragraph [0017] * * paragraph [0036] - paragraph [0038] * * paragraph [0040] - paragraph [0045] * * paragraph [0048] - paragraph [0049] * * paragraph [0056] * * paragraph [0080] * * figures 1,3,4,7 * | 1-13 | |
| Y | US 2005/117585 A1 (LINKEWITSCH NIKLAS ET AL) 2 June 2005 (2005-06-02) * paragraph [0002] * * paragraph [0015] - paragraph [0016] * * paragraph [0018] - paragraph [0020] * * paragraph [0022] * * paragraph [0029] * * figure 3 * | 1-13 | TECHNICAL FIELDS SEARCHED (IPC) H04J |
| A | US 2003/120799 A1 (LAHAV DANNY ET AL) 26 June 2003 (2003-06-26) * paragraph [0012] - paragraph [0013] * * paragraph [0020] - paragraph [0025] * * paragraph [0033] * * paragraph [0036] - paragraph [0038] * * paragraph [0043] - paragraph [0047] * * paragraph [0109] * | 1-13 | |

-/--

The present search report has been drawn up for all claims

| Place of search | Date of completion of the search | Examiner |
|---|---|---|
| The Hague | 16 March 2006 | Marongiu, M.T. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................

& : member of the same patent family, corresponding
document

EPO FORM 1503 03.82 (P04C01)

**European Patent**

**Office**

**EUROPEAN SEARCH REPORT**

Application Number

EP 06 00 0472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/048813 A1 (LAHAV DANNY ET AL) 13 March 2003 (2003-03-13) * paragraph [0004] * * paragraph [0008] - paragraph [0009] * * paragraph [0012] - paragraph [0015] * * paragraph [0040] - paragraph [0041] * * paragraph [0044] * ----- | 1-13 | |
| | | | **TECHNICAL FIELDS SEARCHED (IPC)** |

The present search report has been drawn up for all claims

| Place of search | Date of completion of the search | Examiner |
|---|---|---|
| The Hague | 16 March 2006 | Marongiu, M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 0472

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2006

| Patent document cited in search report | | Publication date | Patent family member(s) | | Publication date |
|---|---|---|---|---|---|
| US 2004156325 | A1 | 12-08-2004 | NONE | | |
| US 2005117585 | A1 | 02-06-2005 | WO 2005048545 | A1 | 26-05-2005 |
| US 2003120799 | A1 | 26-06-2003 | NONE | | |
| US 2003048813 | A1 | 13-03-2003 | NONE | | |

EPO FORM P0459

For more details about this annex : see Official Journal of the European Patent Office, No. 12/82

**EP 1 770 886 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004221952 A